# EUROPEAN PATENT SPECIFICATION

(11) **EP 0 940 274 B1**
(45) Date of publication and mention of the grant of the patent: **03.05.2006**
(21) Application number: 99104440.5
(22) Date of filing: 05.03.1999
(51) Int. Cl.: B60G 21/073, B60G 17/015, E01C 23/088

(54) **Device for the variation of the weight distribution on the supports of self-propelled operating machines**
Vorrichtung zur Änderung der Gewichtsverteilung auf den Stützen von selbstangetriebenen Arbeitsmaschinen
Dispositif pour modifier la répartition du poids sur les supports d'engins automobiles

(30) Priority: 06.03.1998 IT VI980044
(43) Date of publication of application: 08.09.1999
(73) Proprietor: CATERPILLAR PAVING PRODUCTS INC., Minnesota 55445 (US)
(72) Inventor: Bitelli, Romolo, S. Lazzaro (BO) (IT)
(74) Representative: Wagner, Karl H.

(56) References cited:
- EP-A- 0 692 183
- EP-A- 0 783 984
- DE-A- 3 233 046
- DE-A- 19 521 747
- US-A- 2 914 338
- US-A- 4 830 397
- US-A- 5 076 606
- US-A- 5 219 181

## Description

The invention concerns a device for the variation of the weight distribution on the supports of self-propelled operating machines, especially of machines used for road works.

As it is known, the machines for road works are operating machines moving on wheels or on tracks connected to the machine body through hydraulic suspensions.

During the movements of some of said machines, for example of the cold scarifying machines or cold planers for asphalt and concrete, the conveyor belt for the removed material, which is an important part of the machine, shifts in order to load the removed material on the lorry. Since the weight of the material is added to the weight of the belt, it is clear that the barycenter or center of gravity of the machine can be exposed to considerable shifts according to the angle realized by the conveyor belt with respect to the longitudinal axis of the machine.

Another example of shifting of the center of gravity can be observed in machines, still suited for road works, having projecting wheels or tracks that, when required, can be re-entered in order to follow the road narrowing or in order not to cross fixed obstacles. In this case the center of gravity of the machine also shifts.

Hereinafter, for the sake of brevity and simplification, the word "wheels" will be used in the description, meaning both "wheels" and "tracks".

All the above-mentioned machines have independent hydraulic suspensions, but a couple of front or rear wheels are connected hydraulically in order to form an auto-leveling system. This is necessary because the supports on four parts realized through stiff suspensions could cause a support for the machine just on three parts, instead of a support realized on four parts. Instead, by connecting the two wheels, a support triangle is produced, defined by the contact parts on the ground of the two wheels driven independently and by the intermediate point of the line joining the two contact parts on the ground of the two wheels connected hydraulically, that is to say, of the so-called auto-leveling wheels.

In such a distribution, for example by making the rear wheels to be auto-leveling, a support triangle is realized where two vertices correspond to the front wheel supports and the other vertex corresponds to the intermediate point of the line joining the two contact parts on the ground of the rear wheels connected hydraulically.

Since, as it has been said, in some cases the center of gravity of the operating machines is exposed to shifts during the operation and since it is necessary that the machines work safely, the center of gravity of the machine has to be necessarily inside the support triangle in order to avoid upsetting of the operating machine. That is why it is necessary to modify the configuration of the support triangle of the machines so that, even in the case of shift of considerable weights on the supports, the center of gravity of the operating machine is included inside this triangle.

Further, attention is drawn to EP 0 692 183 A1 which is directed to suspension means for a utility vehicle, such as a grape harvester, which comprises a straddling frame supported at its front and rear ends by double-acting hydraulic cylinders which can be exended or retracted in order to level the frame. The rear cylinders are normally blocked for providing the vehicle with a fixed rear axle, while the front cylinders are hydraulically interconnected in order to let them extend or retract in opposition to each other for providing the vehicle with an articulated axle. The hydraulic cylinders are governed by two control valves which enable lifting, lowering and side-ways levelling of the frame. During levelling operations, the hydraulic connection between the front cylinders is automatically broken by a control valve in order to enhance the stability of the vehicle.

US-A-5 219 181 discloses the features of the preamble of claim 1 and an anti-roll system for turn compensation in a vehicle which generates a differential hydraulic signal in which a pressurizing potential corresponds to a first curve direction and a complementary return hydraulic potential. The system includes a pair of rear wheel cylinder and piston assemblies and a pair of front wheel cylinder and piston assemblies. A hydraulic circuit is connected to conduct the pressurizing potential to move the pistons in a first rear wheel cylinder and piston assembly and a first front wheel cylinder and piston assembly, while conducting the return signal to move the pistons in second front wheel cylinder and piston assembly and a second rear wheel cylinder and piston assembly. A hydraulic conductor directly connects corresponding ends of the rear wheel cylinder and piston assemblies to provide a hydraulic conduction between those assemblies in response to conduction of the differential hydraulic signal. A tilt limitation feature is provided in the front wheel cylinder and piston assemblies and is connected to the hydraulic circuit for limiting the maximum displacement of the pistons in the rear and front wheel cylinder and piston assemblies. In a vehicle, the system reacts to a turn by causing the front and rear wheel cylinder and piston assemblies to tilt the vehicle in a direction to counteract the vehicle rolling force caused by the turn. The tilt-limitation element operates to limit the amount of tilt produced by the system of the invention to counteract vehicle roll force. Sensors provide an indication of the turn direction of the vehicle, but no indication of the degree of turning.

Similarly, DE 195 21 747 discloses a roll control and suspension level control for a vehicle. There is no indication of determining or producing signals which are proportional to a variation of the center of gravity configuration.

The main object of the present invention is therefore to realize a device for the variation of the weight distribution on the front or rear supports connected hydraulically so that such a variation has the effect of modifying the supporting triangle so that the center of gravity is always inside said triangle.

Another object to be achieved is that the variation of the supporting triangle can be made automatic according to the variation of the weight distribution of the operating machine.

These and other objects, which will be better understood later, are achieved by a device for the variation of the weight on the supports of self-propelled operating machines, especially for road works, as set forth in claim 1. Preferred embodiments of the present invention may be gathered from the dependent claims. Preferably, the machines comprise a body supported on wheels or tracks by hydraulic suspensions. The device of the present invention comprises at least one couple of hydraulic cylinders relative to the rear (or front) supports. The hydraulic cylinders are double-acting cylinders, each one having a first chamber connected hydraulically to the corresponding first chamber of the other corresponding support, each second chamber of said cylinders being selectively connected through at least one electrovalve to an external source of hydraulic pressure. The reaction thrust furnished by the respective hydraulic piston is proportional to the difference of the reaction force between said cylinders, thereby realizing the modification of the supporting ideal triangle of the operating machine.

According to an embodiment of the invention the variation of pressure in the second chamber of one of the two double-acting cylinders is obtained by a source of external pressure connected to said second pressure chamber through a pressure reducer. Further, the exit pressure from the reducer can be varied to give a pressure which is varied according to the request, so as to modify the supporting triangle of the machine according to what it is believed as necessary.

According to a preferred embodiment, the pressure provided by the external source is distributed by a double way electrovalve which maintains the pressure discharged in both of the second chambers when the electro valve is in the rest position, and selectively connects one or the other chamber of each cylinder by request.

Further characteristics and features of the invention will be better explained in the description of a preferred embodiment of the invention given as an illustrating but not limiting example and shown in the accompanying drawings where:

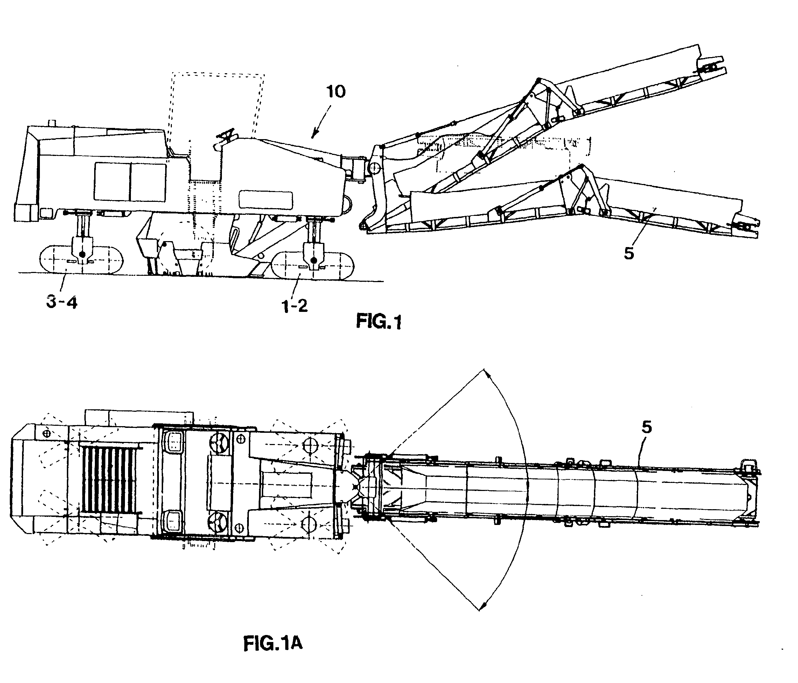

- Figs. 1 and 1a: show, in a side view and a plan view, respectively, an operating machine for road works, the construction of which may cause a shift of the center of gravity during the work;
- Fig. 2: shows a scheme of the device of the invention in the rest position;
- Fig. 3: shows the supporting triangle when the device of Fig. 2 is ineffective;

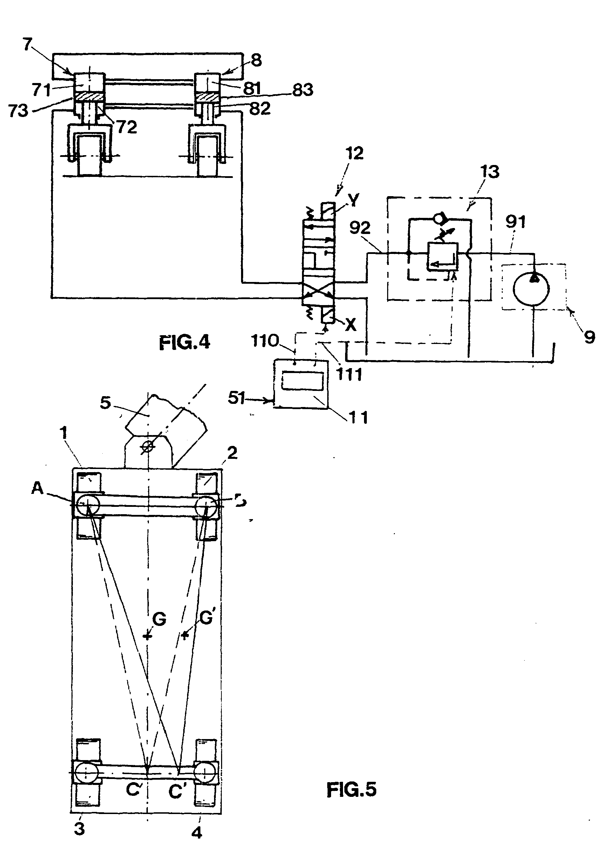

- Fig. 4: shows the scheme of the device of the invention with a cylinder submitted to a variation of pressure;
- Fig. 5: shows the consequent variation of the supporting triangle;
- Fig. 6: shows the scheme of the device of the invention with another cylinder submitted to variations of pressure;
- Fig. 7: shows the variation of the supporting triangle relative to the device of Fig. 6.

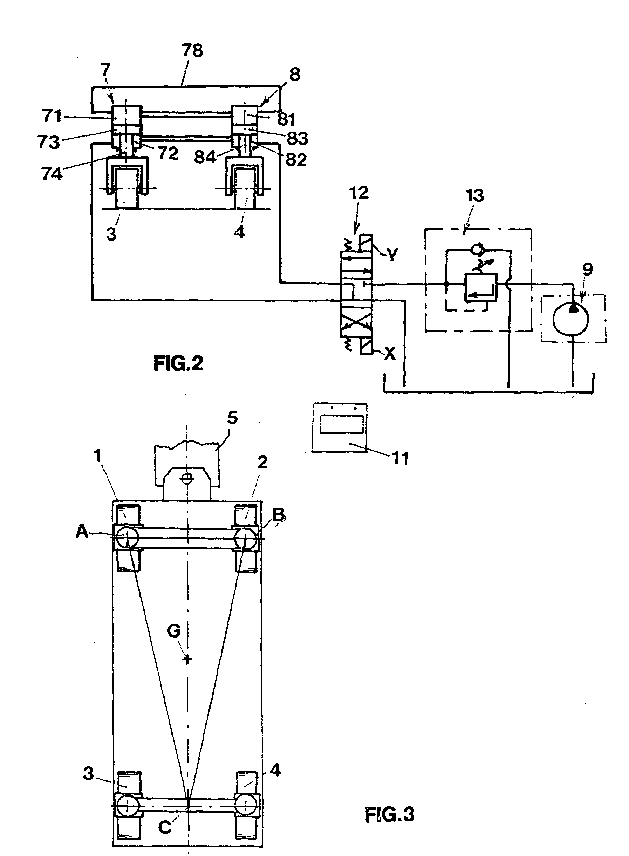

Referring to the above mentioned figures, an operating machine, e.g. a scarifier machine or cold planer indicated by 10, has two front supports, indicated by 1 and 2, and two rear supports, indicated by 3 and 4, which can be seen schematically also in Fig. 2.

The scarifier machine has also a movable conveyor belt 5, which can move 40°-45° from the longitudinal line of the machine.

While the machine 10 is supported on the front tracks 1 and 2 through single-acting hydraulic cylinders, the rear supports of the tracks 3 and 4 are connected to the machine through double-acting cylinders 7 and 8, respectively. More particular, the cylinder 7 has an upper, first chamber 71 and a lower, second chamber 72, while the cylinder 8 has an upper first chamber 81 and a lower, second chamber 82. The piston 73 for the cylinder 7 and 83 for the cylinder 8 separates the upper and lower chambers from each other. The rod 74 of the piston 73 is connected to the support of the wheel or track 3, and the rod 84 of the piston 83 is connected to the support of the wheel or track 4. The first chambers 71 and 81 are hydraulically connected through the pipeline 78 so that, lacking the pressure in the second chambers 72 and 82, respectively, in the first chambers 71 and 81 there is a fluid at a certain and always equal pressure. Therefore, the pressures in the two chambers being equal as an effect of the connection through the pipeline 78, the pistons 73 and 83 are always supported on the two wheels or tracks independently of the distribution of the weights on the operating machine and independently of the position of the center of gravity.

Substantially, if P is the weight bearing on the rear supports, each track 3 and 4 and therefore each piston 73 and 83 connected to it supports a weight of P/2. This is illustrated in Fig. 3 using the ideal supporting triangle indicated with ABC where the two vertices A and B correspond to the supports of the front wheels and the vertex C corresponds to the middle part of the part connecting the rear supports 3 and 4. Obviously, the barycenter or center of gravity G located inside the supporting triangle A, B, C.

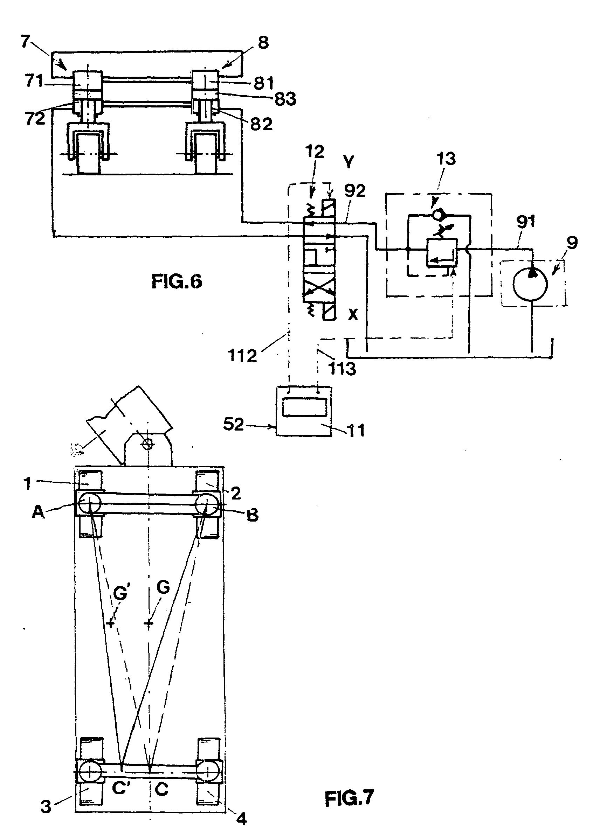

When the operating machine moves the conveyor belt 5 which discharges the material, e.g. into the position indicated in Fig. 5, the electronic control unit 11 receives the signal 51 indicating the rotation angle of the conveyor belt and transmits a signal 110 to the electrovalve 12 and a signal 111 to the pressure reducer 13. In this way, the pressure reducer 13 which is connected to the hydraulic pressure source or pump 9 through a pipeline 91, reduces the pressure in accordance with the signal 111 provided by the electronic control unit 11, and the reduced pressure passes through the pipeline 92 and arrives at the electrovalve 12. Such an electrovalve, being energized by the signal 110, is open in the position controlled by the switch X and permits the pressurized oil to arrive to the second chamber 72 of the cylinder 7.

In this way, the pressure applied to the piston 73 will be the difference between the pressure equally exercised on the two chambers 71 and 81 and the pressure provided by the device through the hydraulic pressure source or pump 9 and the pressure reducer 13.

Therefore, the effect obtained is the different reaction in the supports of the wheels or tracks 3 and 4. It is clear that in this way the wheel or track 4 can support a bigger weight and so the vertex C of the supporting triangle moves towards C', as we can see in Fig. 5.

Consequently, the barycenter or center of gravity G, which has moved towards G' because of the movement of the conveyor belt 5, always falls inside the supporting triangle A, B, C', thus giving the machine stability.

Figs. 6 and 7 show the same behaviour of the device of the invention when the conveyor belt 5 of the operating machine is oriented in the opposite direction. In this case, the sensor located at the conveyor belt will provide a signal 52 to the electronic control unit 11, which in turn provides a signal 112 activating the switch Y instead of the switch X of the electrovalve 12, while the pressure reducer 13 is adjusted in accordance with the signal 113 received from the electronic control unit 11 to give a pressure P1 different from the pressure P requested before.

With these signals, the electrovalve 12 and the pressure reducer 13 are arranged so that the pressure reaches the second chamber 82 of the cylinder 8. Consequently, there will be a variation of the total pressure on the piston 83, which is different from the pressure on the piston 72, so that the supporting triangle is modified through the movement of the vertex C towards the vertex C". As the new center of gravity G" has moved from the previous position G, the new center of gravity remains inside the supporting triangle.

The usefulness of the device of the invention is evident, because during the operating of the machine and during the movement of the belt and of the weights bearing on the machine and on the belt, the machine reacts by modifying the supporting triangle of the machine so as to always maintain the safety conditions.

As has been said before, the device of the invention can be applied also to machines different from the example. For example, it can be applied to machines with wheels projecting from the contour of the machine and being adapted to be withdrawn or swung-in in particular conditions. The modification of the distance of the wheels implies a modification of the supporting triangle and therefore the need to adapt such supporting triangle to possible movements of the barycenter or center of gravity of the machine, which is possible if the device of the invention is applied to such shapes or types of machines.

## Claims

1. Device for the variation of the weight distribution on the supports of self-propelled operating machines, especially for road works, comprising:
at least one pair of hydraulic cylinders (7, 8) associated with rear supports (3, 4) or front supports (1, 2), the hydraulic cylinders (7, 8) being double-acting cylinders, each comprising a first chamber (71, 81) and a second chamber (72, 82) separated by a corresponding piston (73, 83), each cylinder of said at least one pair of hydraulic cylinders (7, 8) having its first chamber (71, 81) connected hydraulically to the corresponding first chamber (71, 81) of the other cylinder of said at least one pair of hydraulic cylinders (7, 8);
at least one electrovalve (12) adapted to connect a selected one of said second chambers (72, 82) of said at least one pair of hydraulic cylinders to an external source (9) of hydraulic pressure while connecting the corresponding other one of said second chambers (72, 82) of said at least one pair of hydraulic cylinders with a hydraulic fluid reservoir, **characterized in that**,
said electrovalve (12) is actuated, and the hydraulic pressure provided from said pressure source (9) to said electrovalve (12) is adjusted, in response to signals (51, 52) which are proportional to a variation of the center of gravity configuration of the operating machine.

2. Device according to claim 1, wherein the electrovalve is a two-way electrovalve (12) adapted to connect each of said second chambers (72, 82) with a reservoir of hydraulic fluid in a quiescent or neutral position in order to keep the pressure of each said second chambers (72, 82) of each of said double-acting hydraulic cylinders discharged.

3. Device according to claim 1 or 2, wherein said electrovalve (12) is responsive to signals (110, 112) provided by an electronic control unit (11) in response to receiving said signals (51, 52) proportional to the variation of the center of gravity configuration of the operating machine.

4. Device according to one of the preceding claims, wherein a pressure reducer (13) is provided between the pressure source (9) and the electrovalve (12), said pressure reducer (13) being adapted to change the pressure supplied to the electrovalve (12).

5. Device according to claim 4, wherein the pressure reducer (13) is adapted to change the pressure supplied to the electrovalve in response to signals (111, 113) provided by an electronic control unit (11) in response to receiving said signals (51, 52) proportional to the variation of the center of gravity configuration of the operating machine.

6. Self-propelled operating machine (10) comprising a device according to one of the preceding claims, said operating machine further comprising:
a movable conveyor belt (5) adapted to be pivoted into angled positions with respect to the longitudinal direction of the operating machine (10) resulting in a variation of the center of gravity configuration of said operating machine (10), and
a sensor adapted to generate a signal (51, 52) indicating the angular position of the conveyor belt (5).

7. Machine (10) according to claim 6 wherein the machine (10) is supported on the front supports (1, 2) through single-acting hydraulic cylinders and on the rear supports (3, 4) through said double-acting hydraulic cylinders (7, 8), respectively.

8. Machine (10) according to claim 7 wherein said conveyor belt (5) is attached to the machine near the front of the machine.

## Patentansprüche

1. Einrichtung zur Änderung der Gewichtsverteilung auf die Stützen von selbstgetriebenen Arbeitsmaschinen, insbesondere für Straßenarbeiten, wobei die Einrichtung folgendes aufweist:
mindestens ein Paar von Hydraulikzylindern (7,8), die mit hinteren Stützen (3, 4) oder vorderen Stützen (1, 2) assoziiert sind, wobei die Hydraulikzylinder (7, 8) doppelt wirkende Zylinder sind, die jeweils eine erste Kammer (71, 81) und eine zweite Kammer (72, 82), getrennt durch ein entsprechenden Kolben (73, 83), aufweisen, wobei die erste Kammer (71, 81) jeden Zylinders des mindestens einen Paars von Hydraulikzylindern (7, 8) hydraulisch mit der entsprechenden ersten Kammer (71, 81) des anderen Zylinders des mindestens einen Paars von Hydraulikzylindern (7, 8) verbunden ist;
mindestens ein Elektroventil (12), das in der Lage ist, eine ausgewählte der zweiten Kammern (72, 82) des mindestens einen Paars von Hydraulikzylindern mit einer externen Hydraulikdruckquelle (9) zu verbinden, während es die entsprechende andere der zweiten Kammern (72, 82) des mindestens einen Paars von Hydraulikzylindern mit einem Hydraulikströmungsmittelreservoir verbindet,
**dadurch gekennzeichnet, dass**
das Elektroventil (12) betätigt wird und der von der Druckquelle (9) an das Elektroventil (12) gelieferte Hydraulikdruck eingestellt wird ansprechend auf Signale (51, 52), die proportional sind zu einer Änderung der Schwerpunktkonfiguration der Arbeitsmaschine.

2. Einrichtung gemäß Anspruch 1, wobei das Elektroventil ein Zweiweg-Elektroventil (12) ist, das in der Lage ist, jede der zweiten Kammern (72, 82) mit einem Hydraulikströmungsmittelreservoir in einer Ruhe- oder Neutralposition zu verbinden, um den Druck jeder der zweiten Kammern (72, 82) jedes der doppelt wirkenden Hydraulikzylinder entlastet zu halten.

3. Einrichtung gemäß Anspruch 1 oder 2, wobei das Elektroventil (12) ansprechend ist auf Signale (110, 112), die durch eine elektronische Steuereinheit (11) geliefert werden, und zwar ansprechend auf den Empfang der Signale (51, 52), die proportional sind zu der Änderung der Schwerpunktkonfiguration der Arbeitsmaschine.

4. Einrichtung gemäß einer der vorgehenden Ansprüchen, wobei eine Druckverminderungseinrichtung (13) zwischen der Druckquelle (9) und dem Elektroventil (12) vorgesehen ist, wobei die Druckverminderungsvorrichtung (13) in der Lage ist, den an das Elektroventil (12) gelieferten Druck zu verändern.

5. Einrichtung gemäß Anspruch 4, wobei die Druckverminderungsvorrichtung (13) in der Lage ist, den an das Elektroventil gelieferten Druck ansprechend auf Signale (111, 113) zu verändern, die von einer elektronischen Steuereinheit (11) geliefert werden, und zwar ansprechend auf die Signale (51, 52), die proportional sind zu der Änderung der Schwerpunktkonfiguration der Arbeitsmaschine.

6. Selbstgetriebene Arbeitsmaschine (10), die eine Einrichtung gemäß einem den vorgehenden Ansprüche aufweist, wobei die Arbeitsmaschine ferner folgendes aufweist:
ein bewegliches Förderband (5), das in der Lage ist, in abgewinkelten Positionen bezüglich der Längsrichtung der Arbeitsmaschine (10) geschwenkt zu werden, was eine Änderung der Schwerpunktkonfiguration der Arbeitsmaschine (10) ergibt, und
einen Sensor, der geeignet ist zum Erzeugen eines Signals (51, 52), das die Winkelposition des Förderbandes (5) anzeigt.

7. Maschine (10) gemäß Anspruch 6, wobei die Maschine (10) auf den vorderen Stützen (1, 2) durch einzeln wirkende Hydraulikzylinder und auf den hinteren Stützen (3, 4) durch die doppelt wirkenden Hydraulikzylinder (7, 8) getragen wird.

8. Maschine (10) gemäß Anspruch 7, wobei das Förderband (5) nahe der Front der Maschine an der Maschine befestigt ist.

## Revendications

1. Dispositif de modification de la répartition des poids sur les supports d'engins automobiles, en particulier pour travaux routiers, comprenant :
au moins deux vérins hydrauliques (7, 8) associés à des supports arrières (3, 4) ou à des supports avants (1, 2), les vérins hydrauliques (7, 8) étant des vérins à double action comprenant chacun une première chambre (71, 81) et une deuxième chambre (72, 82) séparée par un piston correspondant (73, 83), chacun desdits au moins deux vérins hydrauliques (7, 8) ayant sa première chambre (71, 81) reliée hydrauliquement à la première chambre (71, 81) de l'autre desdits au moins deux vérins hydrauliques (7, 8) ;
au moins une électrovanne (12) adaptée à connecter l'une sélectionnée des secondes chambres (72, 82) desdits au moins deux vérins hydrauliques (7, 8) à une source externe (9) de pression hydraulique tout en connectant l'autre correspondante des secondes chambres (72, 82) desdits au moins deux vérins hydrauliques (7, 8) à un réservoir de fluide hydraulique,
**caractérisé en ce que** l'électrovanne (12) est actionnée et la pression hydraulique fournie par la source de pression (9) vers l'électrovanne (12) est ajustée, en réponse à des signaux (51, 52) qui sont proportionnels à la variation de configuration du centre de gravité de l'engin.

2. Dispositif selon la revendication 1, dans lequel l'électrovanne est une électrovanne (12) à deux voies adaptée à connecter chacune des deuxièmes chambres (72, 82) à un réservoir de fluide hydraulique dans un état de repos ou état neutre de façon à maintenir déchargée la pression de chacune des deuxièmes chambres (72, 82) de chacun des vérins hydrauliques (7, 8) à double action.

3. Dispositif selon la revendication 1 ou 2, dans lequel l'électrovanne (12) agit en réponse à des signaux (110, 112) fournis par un module électronique de commande (11) en réponse à la réception desdits signaux (51, 52) proportionnels à la variation de la configuration du centre de gravité de l'engin.

4. Dispositif selon l'une des revendications précédentes, dans lequel un réducteur de pression (13) est prévu entre la source de pression (9) et l'électrovanne (12), le réducteur de pression (13) étant adapté à modifier la pression fournie à l'électrovanne (12).

5. Dispositif selon la revendication 4, dans lequel le réducteur de pression (13) est adapté à modifier la pression fournie à l'électrovanne en réponse à des signaux (111, 113) fournis par un module électronique de commande (11) en réponse à la réception desdits signaux (51, 52) proportionnels à la variation de la configuration du centre de gravité de l'engin.

6. Engin automobile (10) comprenant un dispositif selon l'une des revendications précédentes, cet engin comprenant en outre :
une courroie de convoyeur mobile (5) adaptée à pivoter selon des positions inclinées par rapport à la direction longitudinale de l'engin (10), d'où il résulte une variation de la configuration du centre de gravité de l'engin (10), et
un détecteur adapté à produire un signal (51, 52) indiquant la position angulaire de la courroie du convoyeur (5).

7. Engin (10) selon la revendication 6, dans lequel l'engin (10) est porté sur les supports avants (1, 2) par l'intermédiaire de vérins hydrauliques (7, 8) à simple action et sur les supports arrières (3, 4) par l'intermédiaire de vérins hydrauliques (7, 8) à double action, respectivement.

8. Machine (10) selon la revendication 7, dans laquelle la courroie de convoyeur (5) est fixée à l'engin près de l'avant de l'engin.
